# EUROPEAN PATENT SPECIFICATION

(11) **EP 3 784 845 B1**
(45) Date of publication and mention of the grant of the patent: **05.11.2025**
(21) Application number: 19721226.9
(22) Date of filing: 22.04.2019
(51) Int. Cl.: E04D 13/00, E04D 13/16, B32B 5/26, B32B 19/06, B32B 7/025

(54) **INSULATION**
ISOLIERUNG
ISOLATION

(30) Priority: 23.04.2018 GB 201806568
(43) Date of publication of application: 03.03.2021
(73) Proprietor: Knauf Insulation SPRL, 4600 Visé (BE)
(72) Inventor: BONCA, Metod, 1435 Mont-Saint-Guibert (BE); MENTE, Markus, 1435 Mont-Saint-Guibert (BE)
(74) Representative: ARC-IP
(86) International application number: PCT/EP2019/060253
(87) International publication number: WO 2019/206840

(56) References cited:
- EP-A1- 1 196 019
- EP-A2- 2 281 962
- DE-A1- 10 036 362
- DE-A1- 3 011 500
- US-A- 4 847 140
- US-A1- 2006 182 915
- US-A1- 2015 168 329
- US-A1- 2016 108 612

## Description

This invention relates to insulation, particularly mineral wool insulation, notably for use in roofing applications in combination with a water impermeable membrane, and to a structure incorporating such insulation.

A common type of insulated roof system comprises, in sequence, a support structure, a layer of insulation, for example mineral wool insulation, and an overlying water impermeable membrane which seals the roofing system against ingress of water. This is sometime referred to as a "warm roof" as the insulation is arranged above the structural deck which is thus kept warm. The water impermeable membrane may be retained by mechanical fixing, by adhesion or by overlying ballast. The water impermeability of such a structure may be tested by low voltage electrical conductance: a surface covering of water is used to form a conductive path across the water impermeable membrane; any water leaking through the water impermeable membrane creates an electrical flow path between the surface covering of water at the outside of the roof and an electrical connecter, for example a grid of electrical wires, positioned at the inside of the roof below the membrane. The presence of such an electrical flow path may be detected by using a suitable test instrument electrically connected between the surface covering of water at the outside of the roof and the grid of electrical wires positioned at the inside of the roof and by measuring, for example, current flow or electrical resistance. One aim of the present invention is to provide improved arrangements for this type of system

Known roof systems incorporating leak detection systems include those of: US 2010/0141283 A1 which discloses locating a leak in a membrane on top of a horizontal roofing deck by using conductive wires on the membrane in a grid pattern; US 2011/0178747 A1 which discloses a detector array and computer, the detector array including a boundary wire loop, sensors, and leads; and US 2014/0361796 A1 which discloses use of an electrically conductive intervening layer of a primer or adhesive by which a membrane is attached to a roof support substrate.

Other prior art documents include: US 2006/182915 A1 which related to duct wrap and method for fire protecting a duct; EP2281962 A2 which relates to composite materials comprising a fibrous material and an aerogel; US4847140A which relates to a nonwoven composite fibrous material adaptable as an insulation medium; US 2016/108612 A1 which relates to an external insulation wall for a mechanically-anchored inorganic modified foam insulation board with grid reinforcement; US 2015/168329 A1 which relates to a leak detection and location system and method; DE3011500 A1 which relates to a leak detector for the roof or walls of a building; DE10036362 A1 which relates to a method and system for detecting and locating leaks in seals, in particular building seals; and EP1196019 A1 which relates to a multilayer product for insulation against electromagnetic radiation and corresponding production method.

In accordance with one aspect, the present invention provides a thermally insulated roof structure as defined in claim 1.

In accordance with a further aspect, the present invention provides a method of testing for the presence of a water leak in a building structure having a weatherproof envelope, for example a weatherproof membrane, the method comprising: arranging an insulating element at the interior building side of the weatherproof envelope, the insulating element comprising a first major surface, a first surface layer of insulating material within a body of the insulating element and adjacent to the first major surface, a second major surface, a second surface layer of insulating material within the body of the insulating element and adjacent to the second major surface and a core layer of insulating material positioned between the first and second surface layers, and in which the first surface layer of insulating material is electrically conductive; and electrically connecting the first surface layer of insulating material to apparatus configured to assess a level of electrical conductivity indicative of the presence of water at the first surface layer of insulating material.

The insulating element is preferably a mineral wool insulating element, notably comprising mineral fibres held together by a binder, particularly an organic, thermoset binder. The mineral wool insulating element may comprise:
≥ 80 wt% or ≥ 90 wt% and/or ≤ 98 wt% mineral fibres, notably stone wool fibres; and/or
≥ 2 wt%, ≥ 2.5 wt% or ≥ 3 wt% and/or ≤ 10 wt% ≤ 7 wt% or ≤ 6 wt% or ≤ 5 wt% binder, particularly organic, thermoset binder.

The organic binder content of the mineral wool may be determined by loss on ignition ("LOI"). As used herein, the expression wt% means percentage weight which, unless otherwise qualified, is determined on a dry basis.

Preferably, the binder and the mineral wool insulating element are formaldehyde free. In particular, the binder is preferably not a phenol formaldehyde binder. The mineral wool insulating element (comprising the binder) preferably comprises less than 5 ppm or less than detectable limits of free formaldehyde and/or consist of materials which together comprise less than these amounts of free formaldehyde and/or releases levels of formaldehyde in standardised tests adapted to simulate ordinary use which allows it to be classified as having no or undetectable levels of formaldehyde release. Preferably, such products release less than 10µg/m³, more preferably less than 5 µg/m³ of formaldehyde during the period of 24-48 hours from the start of testing in accordance with ISO 16000. The binder may be a reducing sugar based binder, that is to say a binder obtained by curing a binder composition in which at least 50 wt% of the reactants comprise reducing sugar(s) and/or reaction products of reducing sugar(s). The binder may be a binder obtained by curing a binder composition in which at least 50 wt%, preferably at least 70 wt%, of the reactants comprise reducing sugar(s) and/or reaction products of reducing sugar(s), preferably in combination with a source of nitrogen to form a Maillard reaction product, notably in combination with preferably at least 10 wt% of i) amine(s) and/or ii) carboxylic acid(s).

The insulating element may be: a foam insulating element; an expanded polystyrene insulating element in which the insulating material is expanded polystyrene ("EPS"); an extruded polystyrene insulating element in which the insulating material is extruded polystyrene ("XPS"); a polyurethane insulating element in which the insulating material is polyurethane ("PUR"); a polyisocyanurate insulating element in which the insulating material is polyisocyanurate ("PIR").

The insulating element, and/or the first surface layer and/or second surface layer and/or core layer of insulating material, may have:
- a density which is ≥80 kg/m³, ≥ 90 kg/m³, ≥100 kg/m³ or ≥115 kg/m³ and/or which is ≤ 220 kg/m³, ≤ 210 kg/m³; ≤ 200 kg/m³; ≤ 150 kg/m³ or ≤ 140 kg/m³; and/or
- a thermal conductivity which is ≤ 41 mW/m.K, ≤ 40 mW/m.K or ≤ 39 mW/m.K and/or ≥ 30 mW/m.K, ≥ 32 mW/m.K, ≥ 34 mW/m.K or ≥ 36 mW/m.K when measured at 10°C in accordance with EN 12667 or EN 12939; and/or
- a compression strength which is ≥30 kg/m² , ≥40 kg/m² or ≥50 kg/m² and/or which is ≤ 100 kg/m² or ≤ 90 kg/m² when measured at 10% deformation in accordance with EN 826; and/or
- a fire classification of Euroclass A1 or A2 as determined under EN 13501-1.

Where the insulating element is a mineral wool insulating element it may comprise a dual density mineral panel, that is to say a mineral wool panel comprising a high density surface layer of mineral wool fibres (notably having i) a thickness which is ≥ 5mm and/or ≤ 40 mm and/or ii) a density which is ≥ 130 kg/m³ and/or ≤ 250 Kg/m³) and a lower density underlying layer of mineral wool fibres (notably having i) a thickness which is ≥ 45mm and/or ≤ 400 mm and/or ii) a density which is ≥ 100 kg/m³ and/or ≤ 185 kg/m³). The fibres of the mineral wool insulation panel may be orientated substantially perpendicular to the panel's major surfaces; they may be crimped. The mineral wool insulation panel may have a crimp factor which is ≥ 1.1, ≥ 1.2, ≥ 1.3 ≥ 1.5 or ≥ 2 and/or ≤ 4 or ≤ 3.5. The crimp factor provides an indication of the degree of crimping and thus of fibre re-orientation; it may be assessed by comparing i) the manufacturing line speed of the mineral wool prior to crimping, notably the line speed of a secondary blanket in the case of stone wool insulation with ii) the manufacturing line speed of the mineral wool panel after crimping, notably the line speed of the mineral wool blanket through the curing oven. A crimp factor of 3 indicates a line speed after curing of 1/3 of the line speed prior to crimping.

Where the insulating element is a mineral wool insulating element, each of: the first surface layer of insulating material, the core layer of insulating material and the second surface layer of insulating material preferably comprises mineral wool, notably as described above. The mineral wool insulating element may comprise a first major surface, a first surface layer of mineral wool within a body of the mineral wool insulating element and adjacent to the first major surface, a second major surface, a second surface layer of mineral wool within the body of the mineral wool insulating element and adjacent to the second major surface and a core layer of mineral wool positioned between the first and second surface layers,
in which the first surface layer of mineral wool is electrically conductive and has a surface resistivity which is less than the surface resistivity of the core layer of mineral wool.

The first surface layer of insulating material may have a surface resistivity or sheet resistance which is ≥ 1 Ω/sq, ≥ 10 Ω/sq, ≥ 100 Ω/sq or ≥ 200 Ω/sq and/or ≤ 10 ⁶ Ω/sq, ≤ 10 ⁵ Ω/sq; in the thermally insulated roof structure according to claim 1, the first surface layer of the insulating material is electrically conductive and has a surface resistivity in the range 10⁶ Ω/sq to 1 Ω/sq. The surface resistivity is preferably measured using a four-point probe to avoid effects of contact resistance. Such levels of resistivity facilitate use of the surface layer as a conducting layer as part of a system which detects an electrical flow path created by a water leak. The surface layer of insulating material may have a surface resistivity which is lower than the surface resistivity of the core layer of insulating material, notably a surface resistivity which is at least 10 times, at least 20 times, at least 50 times or at least 100 time lower than the surface resistivity of the core layer. Notably in such cases, the desired surface resistivity of the surface layer of the insulating material may be achieved by treating the surface layer of insulating material with an electrically conductive material whilst leaving the core layer of insulating material untreated. This reduces the amount of electrically conductive material required. The surface resistivity of the core layer may be measured by slicing through the core layer to provide an exposed surface which can be measured.

**The** desired surface resistivity of the surface layer of the insulating material may be achieved by incorporating one or more electrically conductive materials in the insulating material, notably disbursed within the insulating material. The electrically conductive material may be selected from electrically conductive particles, electrically conductive fibres, graphite particles, graphite fibres, metal particles for example of aluminium or copper, metal fibres for example of aluminium or copper. When the electrically conductive material comprises particles, the particle size distribution may be such that:
- the average particle size by mass and/or by number is ≥ 2.0 µm, ≥ 2.5 µm or ≥ 3.0 µm and/or ≤ 5.0 µm, ≤ 4.5 µm or ≤ 4.0 µm; and/or
- the maximum particle size is ≤ 10.0 µm, ≤ 9.0 µm or ≤ 8.0 µm; and/or
- the minimum particle size is ≥ 0.5 µm, ≥ 0.8 µm or ≥ 0.9 µm.

Such particle size distributions facilitate application of the electrically conductive material to the insulating material, notable by spraying, for example as a slurry. Such particle size distribution also facilitates distribution of the electrically conductive material within the insulating material. Where the insulating material is mineral wool, the electrically conductive material may be disbursed between the fibres of the mineral wool.

The electrically conductive material may be applied to the insulating material during manufacture of the insulating material, notably prior to formation of the insulating material in to the insulating element. Particularly where the insulating material is mineral wool, notably stone wool, the mineral wool insulating element may be manufactured by sequentially:
forming mineral fibres from a mineral melt and transporting the mineral fibres in an air stream;
applying an organic binder to the mineral fibres whilst the mineral fibres are being carried in the air stream;
collecting the mineral fibres to form a primary blanket and conveying the primary blanket along a manufacturing line on a primary conveyor;
forming a secondary blanket from the primary blanket by continuously folding the primary blanket across itself on a secondary conveyer advancing in a direction substantially perpendicular to the primary conveyor;
conveying the secondary blanket along the manufacturing line and through a curing oven to cure the organic binder.

The continuous folding of the primary blanket to form the secondary blanket may comprise passing the primary blanket through a pendulum arrangement which reciprocates across the width of the secondary conveyor.

The electrically conductive material may be applied to the insulating material in the form of a slurry or disbursement, for example a suspension of the electrically conductive material in water; it may be poured, rolled or sprayed on to the insulating material. In the case of the formation of a primary and secondary blanket, notably as described above, the electrically conductive material may be applied to the upper major surface of the primary blanket. The electrically conductive material may be applied to only one side of the upper major surface of the primary blanket, for example to a band of the primary blanket which extends substantially from one edge of the primary blanket for a distance towards the centre of the primary blanket to form a band having a width that is ≥ 50mm, ≥ 100mm or ≥ 150mm and/or ≤ 500mm, ≤ 450mm or ≤ 400mm; the rest of the upper major surface of the primary blanket may not have the electrically conductive material applied to it. Alternatively, the electrically conductive material may be applied to both sides of the upper major surface of the primary blanket, for example to bands of the primary blanket which extends substantially from each edge of the primary blanket for a distance towards the centre of the primary blanket to form bands having a width that is ≥ 50mm, ≥ 100mm or ≥ 150mm and/or ≤ 500mm, ≤ 450mm or ≤ 400mm; the rest of the upper major surface of the primary blanket may not have the electrically conductive material applied to it. Application of the electrically conductive material to only one side of the upper major surface of the primary blanket may be used to provide the electrically conductive material at only one major surface of the secondary blanket; application of the electrically conductive material to each side of the upper major surface of the primary blanket but not to the central portion of the upper surface of the primary blanket may be used to provide the electrically conductive material at each major surface of the secondary blanket but not in the core of the secondary blanket.

Alternatively, the electrically conductive material may be applied to: the entire upper major surface of the primary blanket; or to the upper surface, notably the entire upper surface, of the secondary blanket, for example subsequent to passage through a pendulum; or to the upper surface, notably the entire upper surface, of the insulating element.

The electrically conductive material may be applied prior to passage of the insulating material through an oven, for example a curing oven intended to cure a binder applied to mineral wool; in this case, where the electrically conductive material is applied as a suspension it may be dried during passage through the oven. Alternatively, the electrically conductive material may be applied subsequent to passage of the insulating material through an oven, for example a curing oven.

When the electrically conductive particles are applied in the form of a suspension or slurry, for example a suspension of the electrically conductive material in water, notably by being sprayed, such a suspension or slurry may comprise:
≥ 10 wt%, ≥ 15 wt%, ≥ 20 wt%, ≥ 25, wt% or ≥ 30 wt%; and/or
≤ 60 wt%, ≤ 50 wt%, ≤ 45 wt%, ≤ 40 wt% or ≤ 35 wt%;
of electrically conduction materials, notable in the form of particles, with respect to the total weight of the slurry. The remaining weight of the slurry may consist of water and any additives, for example, surfactants.

The electrically conductive surface layer of the insulating material may have a thickness which is ≥ 1mm, ≥ 2mm, ≥ 3mm, ≥ 5mm, ≥ 10mm and/or ≤ 50mm, ≤ 30mm or ≤ 20mm. A thickness which is ≥ 3mm and ≤ 30mm may be used to provide a suitable contact thickness to facilitate electrical contact between the electrically conductive surface layer of adjacent insulating elements.

The second surface layer of the insulating layer may be electrically conductive; it may have one or more of the features described above with respect to the electrically conductive first surface layer. Each of the first and second surface layers of insulating material may be electrically conductive and have a surface resistivity which is less than the surface resistivity of the core layer of the insulating material. In this arrangement, the presence of water, notably from a water leak, passing from the first surface layer of insulating material and through the core layer of the insulating material to the second surface layer of insulating material may be detected by electrically connecting each of the first and second surface layer of mineral wool to apparatus configured to assess a level of electrical conductivity between the first and second surface layers of insulating material. Particularly in this case, the insulating element may have a short time water absorption (EN 1609) < 1.0 kg/m² and/or a long time water absorption (EN 12087) < 3.0 kg/m³.

It has surprisingly been found that electrical connection between the surface layers of adjacent individual insulating elements may be achieved by direct contact between the side surface of the surface layers of adjacent individual insulating elements. This simplifies construction by avoiding the need to arrange, for example continuous electrical wires across the entire surface of the area it is desired to monitor or to provide for a separate electrical connection between individual insulating panels. The insulating elements may have:
- a width which is ≥0.4m, ≥0.5m or ≥0.55m and/or ≤1m, ≤0.8m or ≤0.65m; and/or
- a length which is ≥0.6m, ≥0.8m or ≥0.95m and/or ≤1.4m, ≤1.2m or ≤1.05m; and/or
- a thickness which is ≥30mm, ≥40mm or ≥50mm and/or ≤200mm, ≤180mm or ≤170mm. Individual insulating elements may be assembled adjacent to each other such that their side surfaces touch and such that no additional measures other than contact between the side surfaces of adjacent insulation elements is required for electrical contact between their surface layers.

The thermally insulated roof structure may be a warm roof structure, for example, a warm roof with a built-up felt or asphalt roof covering, a warm roof with a single ply membrane or an inverted/protected membrane/green roof; it may be a flat roof structure. As used herein, the term "flat roof structure" means a roof which is substantially horizontal, notably having an angle of inclination which is less than 10° or less than 5°. Flat roof structures are generally provided with an angle of inclination of about 2° to facilitate water runoff. The roof structure may comprise, preferably in sequence from the inside to the outside of a building structure: a support structure; the insulating panel; and the overlying weatherproof membrane secured to insulating panel, notably by an adhesive. The support structure may comprise a timber deck, a metal deck or a concrete deck. A vapour control layer, for example a polymer sheet, polyethylene sheet, reinforced polyethylene sheet, bitumen layer or bitumen bonded felt, may be provided between the support structure and the insulating panel. The weatherproof membrane may be a single ply membrane. It may be selected from a bitumen membrane, a fully bonded built-up bitumen membrane, mastic asphalt, a polymer membrane, a PVC membrane; an EPDM (ethylene propylene diene terpolymer) membrane; a membrane applied in liquid form. The adhesive may be a "hot melt" adhesive, for example a bitumen or bitumen-based adhesive. The hot melt adhesive may be applied in liquid form, for example poured on to or spread over the insulating element prior to application of the membrane. Alternatively, the adhesive may be contained within the membrane and released by heating the membrane, for example by torching a bituminous membrane. The adhesive may be a cold adhesive; it may be a polymer adhesive. The adhesive may be a polyurethane adhesive, a polyacrylic adhesive, a rubber adhesive or a rubber contact adhesive. The adhesive may be applied at a viscosity in the range 750 to 6000 cps; the quantity of adhesive may be ≥ 50 g/m², or ≥ 100 g/m² or ≥ 150 g/m² and/or ≤ 800g/m², or ≤ 600g/m², or ≤ 500g/m², or ≤ 350 g/m². In addition to adhesion between the weatherproof membrane and the insulating element, the roof structure may comprise anchors, notably mechanical fixations, to secure the weatherproof membrane, for example to secure the weatherproof membrane to the insulating element and/or to the support structure.

The roof structure may comprise a single layer of insulating elements or a plurality of layers comprising a stack of individual insulating elements.

Testing for the presence of a water leak may comprise testing upon initial installation of the roof structure; it may comprise periodic or continuous testing during the lifetime of the roof structure, notably during the period of any guarantee provided with respect to the roof structure. Testing may comprise testing for a reduction in electrical resistance attributable to an electrical flow path resulting from the presence of a water leak.

Embodiments of the invention will now be described, by way of example only, with reference to the accompanying drawings of which:
Fig. 1 is a cross section of an insulating element;
Fig. 2 is a schematic representation of a production line for an insulating element;
Fig. 3 is a schematic cross section of a roof structure; and
Fig. 4 and Fig 5 are cross sections of alternative insulating elements.

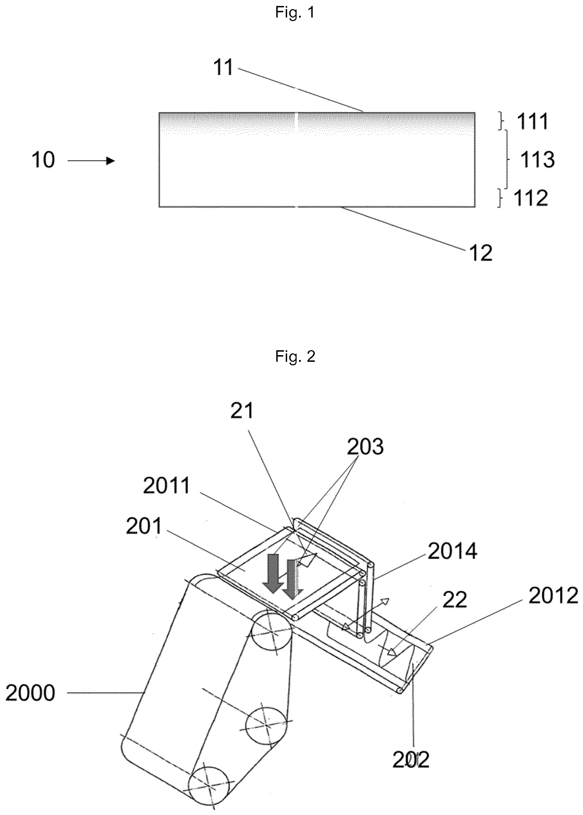

The insulating element 10 of Fig 1 is a mineral wool board having stone wool fibres held together by an organic binder. The mineral wool board comprises: a first major surface 11, a first surface layer of mineral wool 111 within the body of the mineral wool insulating element 10 and adjacent to the first major surface 11, a second major surface 12, a second surface layer of mineral wool 112 within the body of the mineral wool insulating element and adjacent to the second major surface 12 and a core layer of mineral wool 113 positioned between the first 111 and second 112 surface layers. The first surface layer of mineral wool 11 comprises electrically conductive graphite particles applied to and interspersed between its mineral wool fibres so that it is electrically conductive. The core layer 113 and second surface layer 112 of mineral wool do not have any such electrically conductive elements present; the surface resistivity of first surface layer of mineral wool 11 is thus less than the surface resistivity of the core layer of mineral wool.

Fig 2 illustrates part of an apparatus which may be used to manufacture a mineral wool panel 10. Mineral wool fibres, to which a thermally curable binder has been applied, are transferred in the form of a primary blanket 201 having a substantially homogeneous weight per unit area across its width w1 from a collection belt 2000 to a primary conveyor 2011 advancing in a first direction 21. A swinging pendulum mechanism 2014 is used to transfer the primary blanket 201 to a secondary conveyer 2012 advancing in a direction 22 substantially perpendicular to the primary conveyer 2011 so as to form a secondary blanket 202 by reciprocal folding of the primary blanket 201. Spray nozzles 203 are arranged to spray a suspension of electrically conductive graphite particles on to the right hand side (along the direction of movement 21) of the top major surface of the primary blanket 201 to form a band having a width of between 200 and 400 mm which extends across the top major surface of the primary blanket from the side edge towards the centre. During formation of the secondary blanket 202, the right-hand side of the primary blanket forms the top major surface of the secondary blanket 202. In this way, the graphite particles are arranged at a first, uppermost surface layer of mineral wool within the body of the mineral wool forming the secondary blanket and adjacent to the top major surface of the secondary blanket.

In a subsequent step (not illustrated) the secondary blanket is compressed and passed through a curing oven to cure its binder and remove water from the suspension of graphite particles; its edges may subsequently be trimmed to size.

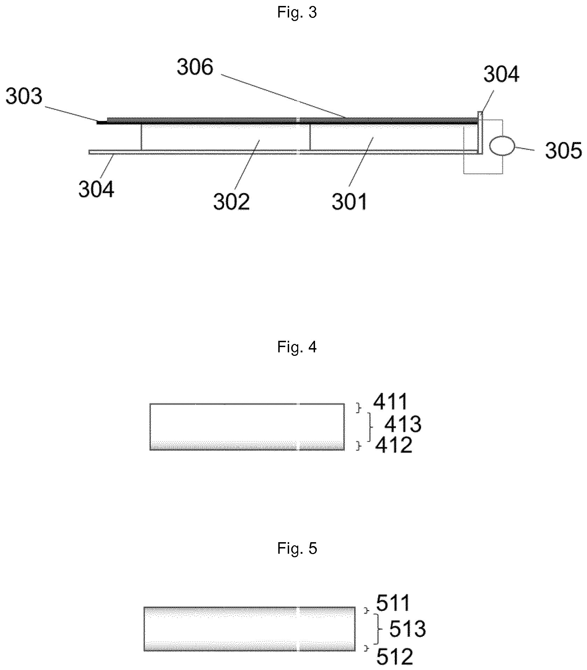

In the thermally insulated roof structure of Fig 3, a plurality of insulating elements 301, 302 are arranged at the interior building side of a weatherproof envelope which is provided by a weatherproof membrane 303. The insulating elements 301,302 are supported by the structure of the building 304; the weatherproof membrane 303 is adhered to insulating elements 301, 302 and sealed at its edges to prevent ingress of water. In order to detect the presence of any undesired water leaks, a voltmeter 305 is electrically connected between the electrically conductive surface layer 111 of one of the insulating elements 301 and a layer of water 306 which is provided at the surface of the roof. Any undesired leak of water through the membrane 303 creates an electrical flow path between the electrically conductive surface layer 111 and the layer of water 306, the presence of which is detected by the voltmeter 305.

As illustrated in Fig 4, an insulating panel 40 may be used with its electrically conducting surface layer 412 positioned at the bottom.

In the insulating panel 50 of Fig 5 each of the first 511 and second 512 surface layers is made electrically conductive whilst the core lay 513 is not. With this type of panel, the presence of water passing through the core lay 513 and creating an electrical flow path between the first 511 and second 512 surface layers may be detected, for example by measuring electrical resistance or current flow between the first 511 and second 512 surface layers.

## Claims

1. A thermally insulated roof structure comprising: an external weatherproof membrane (303) and an underlying insulating element (10),
in which the insulating element comprises: a first major surface (11), a first surface layer of insulating material (111) within a body of the insulating element and adjacent to the first major surface, a second major surface (12), a second surface layer of insulating material (112) within the body of the insulating element (10) and adjacent to the second major surface (12) and a core layer of insulating material (113) positioned between the first and second surface layers,
in which the first surface layer of insulating material (111) is electrically conductive and has a surface resistivity in the range 10⁶ Ω/sq to 1 Ω/sq .

2. A thermally insulated roof structure in accordance with claim 1, in which the electrically conductive first surface layer of insulating material (111) is electrically connected to apparatus configured to assess a level of electrical conductivity indicative of the presence of water at the first surface layer of insulating material.

3. A thermally insulated roof structure in accordance with any preceding claim, in which the first surface layer of insulating material (111) has a surface resistivity which is less than the surface resistivity of the core layer of insulating material (113).

4. A thermally insulated roof structure in accordance with any preceding claim , in which the insulating element (10) is a mineral wool insulating element, the first surface layer of insulating material (111) is a layer of mineral wool, the second surface layer of insulating material (112) is a layer of mineral wool and the core layer of insulating material (113) is a layer of mineral wool.

5. A thermally insulated roof structure in accordance with any preceding claim, in which the core layer of insulating material (113) has a surface resistivity which is at least 10 times higher than the surface resistivity of the first surface layer of insulating material (111).

6. A thermally insulated roof structure according to claim 4, in which the electrically conducting first surface layer of mineral wool (111) comprises electrically conductive particles, notably selected from graphite particles, graphite fibres, aluminium particles and copper particles, disbursed between the fibres of the mineral wool.

7. A thermally insulated roof structure in accordance with any preceding claim, in which the electrically conductive first surface layer of insulating material (111) has a thickness which is ≥ 3mm and ≤ 30mm.

8. A thermally insulated roof structure in accordance with any preceding claim, in which in the second surface layer of insulating material (112) is electrically conductive, notably in which the second surface layer of insulating material (112) comprises at least one of the following features:
8.1 a surface resistivity which is less than the surface resistivity of the core layer of insulating material, notably at least 10 times less than the surface resistivity of the core layer of insulating material;
8.2 a surface resistivity in the range of 10⁶ Ω/sq to 1 Ω/sq ;
8.3 comprises electrically conductive particles, notably selected from graphite particles, graphite fibres, aluminium particles and copper particles, disbursed between fibres of mineral wool;
8.4 a thickness which is ≥ 3mm and ≤ 30mm.

9. A thermally insulated roof structure in accordance with any preceding claim, in which the insulating element (10) comprises at least one of the following features:
a density which is ≥ 80 kg/m³ and ≤ 280 kg/m³, notably ≥ 110 kg/m³ and ≤ 150 kg/m³;
a compressive strength measured in accordance with EN826 which is ≥ 30 kPa and ≤ 120;
a thermal conductivity (λ) at 10°C according to EN 12667 or EN 12939 which is ≥ 30 mW/(mK) and ≤ 45 mW/(mK);
a thickness which is ≥ 80 mm and ≤ 400 mm.

10. A thermally insulated roof structure in accordance with any preceding claim, in which electrical conduction between the first surface layers (111) of adjacent individual insulating elements is achieved by direct contact between side surfaces of the first surface layers of adjacent individual insulating elements.

11. A method of testing for the presence of a water leak in a building structure comprising a weatherproof envelope (303), the method comprising:
arranging an insulating element (10) at the interior building side of the weatherproof envelope, the insulating element comprising a first major surface (11), a first surface layer of insulating material (111) within a body of the insulating element and adjacent to the first major surface, a second major surface (12), a second surface layer of insulating material (112) within the body of the insulating element and adjacent to the second major surface and a core layer of mineral wool (113) positioned between the first and second surface layers, and in which the first surface layer of insulating material (111) is electrically conductive, notably having a surface resistivity in the range 10⁶ Ω/sq to 1 Ω/sq ;
electrically connecting the first surface layer of insulating material to apparatus (305) configured to assess a level of electrical conductivity indicative of the presence of water at the first surface layer of insulating material.

12. A method in accordance with claim 11, in which the building structure is a flat roof and the weatherproof envelope is a weatherproof membrane (303), and in which the method comprises electrically connecting the first surface layer of insulating material (111) to a layer of water (306) present at the external surface of the weatherproof membrane (303).

13. A method in accordance with claim 11, in which the presence of water within the mineral wool element is assessed by applying a voltage between the first (111) and second (112) surface layers of the mineral wool insulating element (10).

14. A method in accordance with any of claims 12 to 13, comprising continuously monitoring for the presence of water in the insulating element (10) indicative of a water leak and providing an alarm signal in the event of a level of electrical conductivity indicative of a water leak being detected.

15. A method in accordance with any of claims 11 to 14, in which the building structure is a thermally insulated roof structure in accordance with any of claims 1 to 10.

## Patentansprüche

1. Thermisch isolierte Dachstruktur, umfassend: eine äußere wetterfeste Membran (303) und ein darunter liegendes Isolierelement (10),
in welcher das Isolierelement umfasst: eine erste Hauptfläche (11), eine erste Oberflächenschicht aus Isoliermaterial (111) innerhalb eines Körpers des Isolierelements und angrenzend an die erste Hauptfläche, eine zweite Hauptfläche (12), eine zweite Oberflächenschicht aus Isoliermaterial (112) innerhalb des Körpers des Isolierelements (10) und angrenzend an die zweite Hauptfläche (12) und eine Kernschicht aus Isoliermaterial (113), die zwischen den ersten und zweiten Oberflächenschichten angeordnet ist,
in welcher die erste Oberflächenschicht aus Isoliermaterial (111) elektrisch leitfähig ist und einen Oberflächenwiderstand im Bereich von 10⁶ Ω/sq bis 1 Ω/sq aufweist.

2. Thermisch isolierte Dachstruktur nach Anspruch 1, in welcher die elektrisch leitfähige erste Oberflächenschicht aus Isoliermaterial (111) elektrisch mit einer Vorrichtung verbunden ist, die konfiguriert ist, einen Grad einer elektrischen Leitfähigkeit festzustellen, der auf das Vorhandensein von Wasser an der ersten Oberflächenschicht aus Isoliermaterial hinweist.

3. Thermisch isolierte Dachstruktur nach einem der vorstehenden Ansprüche, in welcher die erste Oberflächenschicht aus Isoliermaterial (111) einen Oberflächenwiderstand aufweist, welcher geringer ist als der Oberflächenwiderstand der Kernschicht aus Isoliermaterial (113).

4. Thermisch isolierte Dachstruktur nach einem der vorstehenden Ansprüche, in welcher das Isolierelement (10) ein Mineralwolle-Isolierelement ist, die erste Oberflächenschicht aus Isoliermaterial (111) eine Schicht aus Mineralwolle ist, die zweite Oberflächenschicht aus Isoliermaterial (112) eine Schicht aus Mineralwolle ist und die Kernschicht aus Isoliermaterial (113) eine Schicht aus Mineralwolle ist.

5. Thermisch isolierte Dachstruktur nach einem der vorstehenden Ansprüche, in welcher die Kernschicht aus Isoliermaterial (113) einen Oberflächenwiderstand aufweist, welcher mindestens zehnmal höher ist als der Oberflächenwiderstand der ersten Oberflächenschicht aus Isoliermaterial (111).

6. Thermisch isolierte Dachstruktur nach Anspruch 4, in welcher die elektrisch leitende erste Oberflächenschicht aus Mineralwolle (111) elektrisch leitende Teilchen umfasst, die insbesondere aus Graphitteilchen, Graphitfasern, Aluminiumteilchen und Kupferteilchen ausgewählt sind und zwischen den Fasern der Mineralwolle verteilt sind.

7. Thermisch isolierte Dachstruktur nach einem der vorstehenden Ansprüche, in welcher die elektrisch leitfähige erste Oberflächenschicht aus Isoliermaterial (111) eine Dicke aufweist, welche ≥ 3mm und ≤ 30mm ist.

8. Thermisch isolierte Dachstruktur nach einem der vorstehenden Ansprüche, in welcher die zweite Oberflächenschicht aus Isoliermaterial (112) elektrisch leitfähig ist, insbesondere in welcher die zweite Oberflächenschicht aus Isoliermaterial (112) mindestens eines der folgenden Merkmale umfasst:
8.1 einen Oberflächenwiderstand, welcher geringer ist als der Oberflächenwiderstand der Kernschicht aus Isoliermaterial, insbesondere mindestens zehnmal geringer als der Oberflächenwiderstand der Kernschicht aus Isoliermaterial;
8.2 einen Oberflächenwiderstand im Bereich von 10⁶ Ω/sq bis 1 Ω/sq;
8.3 umfasst elektrisch leitfähige Teilchen, insbesondere ausgewählt aus Graphitteilchen, Graphitfasern, Aluminiumteilchen und Kupferteilchen, die zwischen Mineralwollefasern verteilt sind;
8.4 eine Dicke, welche ≥ 3mm und ≤ 30mm ist.

9. Thermisch isolierte Dachstruktur nacheinem der vorstehenden Ansprüche, in welcher das Isolierelement (10) mindestens eines der folgenden Merkmale umfasst:
eine Dichte, welche ≥ 80 kg/m³ und ≤ 280 kg/m³ ist, insbesondere ≥ 110 kg/m³ und ≤ 150 kg/m³;
eine gemäß EN 826 gemessene Druckfestigkeit, welche ≥ 30 kPa und ≤ 120 ist;
eine Wärmeleitfähigkeit (λ) bei 10°C gemäß EN 12667 oder EN 12939, welche ≥ 30 mW/(mK) und ≤ 45 mW/(mK) ist;
eine Dicke, welche ≥ 80 mm und ≤ 400 mm ist.

10. Thermisch isolierte Dachstruktur nach einem der vorstehenden Ansprüche, in welcher eine elektrische Verbindung zwischen den ersten Oberflächenschichten (111) angrenzender einzelner Isolierelemente durch direkten Kontakt zwischen den Seitenflächen der ersten Oberflächenschichten angrenzender einzelner Isolierelemente erreicht wird.

11. Verfahren zum Prüfen auf das Vorhandensein eines Wasserlecks in einer Gebäudestruktur, umfassend eine wetterfeste Hülle (303), wobei das Verfahren umfasst:
Anordnen eines Isolierelements (10) an der inneren Gebäudeseite der wetterfesten Hülle, wobei das Isolierelement eine erste Hauptfläche (11), eine erste Oberflächenschicht aus Isoliermaterial (111) innerhalb eines Körpers des Isolierelements und angrenzend an die erste Hauptfläche, eine zweite Hauptfläche (12), eine zweite Oberflächenschicht aus Isoliermaterial (112) innerhalb des Körpers des Isolierelements und angrenzend an die zweite Hauptfläche und eine Kernschicht aus Mineralwolle (113) umfasst, die zwischen den ersten und zweiten Oberflächenschichten angeordnet ist, und in welcher die erste Oberflächenschicht aus Isoliermaterial (111) elektrisch leitfähig ist, insbesondere aufweisend einen Oberflächenwiderstand im Bereich von 10⁶ Ω/sq bis 1 Ω/sq;
elektrisches Verbinden der ersten Oberflächenschicht aus Isoliermaterial mit einer Vorrichtung (305), die konfiguriert ist, einen Grad der elektrischen Leitfähigkeit festzustellen, der auf das Vorhandensein von Wasser an der ersten Oberflächenschicht aus Isoliermaterial hinweist.

12. Verfahren nach Anspruch 11, in welchem die Gebäudestruktur ein Flachdach ist und die wetterfeste Hülle eine wetterfeste Membran (303) ist, und in welchem das Verfahren das elektrische Verbinden der ersten Oberflächenschicht aus Isoliermaterial (111) mit einer Wasserschicht (306) umfasst, die an der äußeren Oberfläche der wetterfesten Membran (303) vorhanden ist.

13. Verfahren nach Anspruch 11, in welchem das Vorhandensein von Wasser innerhalb des Mineralwolleelements durch Anlegen einer Spannung zwischen den ersten (111) und zweiten (112) Oberflächenschichten des Mineralwolle-Isolierelements (10) festgestellt wird.

14. Verfahren nach einem der Ansprüche 12 bis 13, umfassend kontinuierliches Überwachen des Vorhandenseins von Wasser im Isolierelement (10), das auf ein Wasserleck hinweist, und Ausgeben eines Alarmsignals im Fall, dass ein auf ein Wasserleck hinweisender elektrischer Leitfähigkeitsgrad ermittelt wird.

15. Verfahren nach einem der Ansprüche 11 bis 14, in welchem die Gebäudestruktur eine thermisch isolierte Dachstruktur nach einem der Ansprüche 1 bis 10 ist.

## Revendications

1. Structure de toiture à isolation thermique comprenant : une membrane extérieure résistante aux intempéries (303) et un élément isolant sous-jacent (10),
dans laquelle l'élément isolant comprend : une première surface principale (11), une première couche superficielle de matériau isolant (111) dans un corps de l'élément isolant et adjacente à la première surface principale ; une seconde surface principale (12), une seconde couche superficielle de matériau isolant (112) dans le corps de l'élément isolant (10) et adjacente à la seconde surface principale (12) et une couche centrale de matériau isolant (113) positionnée entre les première et seconde couches superficielles,
dans laquelle la première couche superficielle de matériau isolant (111) est conductrice d'électricité et présente une résistivité superficielle comprise entre 10⁶ Ω/sq to 1 Ω/sq .

2. Structure de toit isolée thermiquement selon la revendication 1, dans laquelle la première couche de surface électriquement conductrice de matériau isolant (111) est connectée électriquement à un appareil configuré pour évaluer un niveau de conductivité électrique indicatif de la présence d'eau à la première couche superficielle de matériau isolant.

3. Structure de toit isolée thermiquement selon l'une quelconque des revendications précédentes, dans laquelle la première couche superficielle de matériau isolant (111) a une résistivité superficielle qui est inférieure à la résistivité superficielle de la couche centrale de matériau isolant (113).

4. Structure de toit isolée thermiquement selon l'une quelconque des revendications précédentes, dans laquelle l'élément isolant (10) est un élément isolant en laine minérale, la première couche superficielle de matériau isolant (111) est une couche de laine minérale, la deuxième couche superficielle de matériau isolant (112) est une couche de laine minérale et la couche centrale de matériau isolant (113) est une couche de laine minérale.

5. Structure de toit isolée thermiquement selon l'une quelconque des revendications précédentes, dans laquelle la couche centrale de matériau isolant (113) a une résistivité superficielle qui est au moins 10 fois supérieure à la résistivité superficielle de la première couche superficielle de matériau isolant (111).

6. Structure de toiture à isolation thermique selon la revendication 4, dans laquelle la première couche superficielle conductrice d'électricité de laine minérale (111) comprend des particules conductrices d'électricité, notamment choisies parmi des particules de graphite, des fibres de graphite, des particules d'aluminium et des particules de cuivre, réparties entre les fibres de la laine minérale.

7. Structure de toit isolée thermiquement selon l'une quelconque des revendications précédentes, dans laquelle la première couche superficielle électriquement conductrice de matériau isolant (111) a une épaisseur qui est ≥ 3 mm et ≤ 30 mm.

8. Structure de toiture à isolation thermique selon l'une quelconque des revendications précédentes, dans laquelle la seconde couche superficielle de matériau isolant (112) est conductrice d'électricité, notamment dans laquelle la seconde couche superficielle de matériau isolant (112) présente au moins l'une des caractéristiques suivantes :
8.1 une résistivité superficielle inférieure à la résistivité superficielle de la couche centrale de matériau isolant, notamment au moins 10 fois inférieure à la résistivité superficielle de la couche centrale de matériau isolant;
8.2 une résistivité superficielle comprise entre 10⁶ Ω/sq to 1 Ω/sq;
8.3 comprend des particules conductrices d'électricité, notamment choisies parmi des particules de graphite, des fibres de graphite, des particules d'aluminium et des particules de cuivre, réparties entre des fibres de laine minérale;
8.4 une épaisseur ≥ 3 mm et ≤ 30 mm.

9. Structure de toiture à isolation thermique selon l'une quelconque des revendications précédentes, dans laquelle l'élément isolant (10) présente au moins l'une des caractéristiques suivantes :
une masse volumique ≥ 80 kg/m³ et ≤ 280 kg/m³, notamment ≥ 110 kg/m³ et ≤ 150 kg/m³;
une résistance à la compression, mesurée selon EN 826, ≥ 30 kPa et ≤ 120 kPa;
une conductivité thermique (λ) à 10 °C selon EN 12667 ou EN 12939 ≥ 30 mW/(mK) et ≤ 45 mW/(mK);
une épaisseur ≥ 80 mm et ≤ 400 mm.

10. Structure de toit isolée thermiquement selon l'une quelconque des revendications précédentes, dans laquelle la conduction électrique entre les premières couches superficielle (111) d'éléments isolants individuels adjacents est obtenue par contact direct entre des surfaces latérales des premières couches superficielle d'éléments isolants individuels adjacents.

11. Méthode de détection d'une fuite d'eau dans une structure de bâtiment comprenant une enveloppe résistante aux intempéries (303), la méthode comprenant:
la disposition d'un élément isolant (10) côté intérieur de bâtiment de l'enveloppe résistante aux intempéries, l'élément isolant comprenant une première surface principale (11), une première couche superficielle de matériau isolant (111) dans un corps de l'élément isolant et adjacente à la première surface principale, une seconde surface principale (12), une seconde couche superficielle de matériau isolant (112) dans le corps de l'élément isolant et adjacente à la seconde surface principale, et une couche centrale de laine minérale (113) positionnée entre les première et seconde couches, et dans laquelle la première couche superficielle de matériau isolant (111) est électroconductrice, présentant notamment une résistivité superficielle comprise entre 10⁶ Ω/sq to 1 Ω /sq ;
la connexion électrique de la première couche superficielle de matériau isolant à un appareil (305) configuré pour évaluer un niveau de conductivité électrique indicatif la présence d'eau à la première couche superficielle de matériau isolant

12. Méthode selon la revendication 11, dans laquelle la structure du bâtiment est un toit plat et l'enveloppe résistante aux intempéries est une membrane résistante aux intempéries (303), et dans laquelle la méthode comprend la connexion électrique de la première couche superficielle de matériau isolant (111) à une couche d'eau (306) présente à la surface externe de la membrane résistante aux intempéries (303).

13. Méthode selon la revendication 11, dans laquelle la présence d'eau dans l'élément en laine minérale est évaluée en appliquant une tension entre les première (111) et deuxième (112) couches superficielles de l'élément isolant en laine minérale (10).

14. Méthode selon l'une quelconque des revendications 12 à 13, comprenant la surveillance continue de la présence d'eau dans l'élément isolant (10) indicative d'une fuite d'eau et la fourniture d'un signal d'alarme dans le cas où un niveau de conductivité électrique indicatif d'une fuite d'eau est détecté.

15. Méthode selon l'une quelconque des revendications 11 à 14, dans laquelle la structure du bâtiment est une structure de toit isolée thermiquement selon l'une quelconque des revendications 1 à 10.
